Europäisches Patentamt

European Patent Office

Office européen des brevets

(11) Numéro de publication :. **0 045 268**
**B1**

(12)

# FASCICULE DE BREVET EUROPÉEN

(45) Date de publication du fascicule du brevet :
15.04.87

(51) Int. Cl.⁴: **F 16 F   9/34**, F 16 F   9/42,
F 16 F   9/44, F 16 K 47/08

(21) Numéro de dépôt : 81401220.9

(22) Date de dépôt : 29.07.81

(54) **Dispositif de laminage.**

(30) Priorité : 29.07.80 FR 8016673

(43) Date de publication de la demande :
03.02.82 Bulletin 82/05

(45) Mention de la délivrance du brevet :
15.04.87 Bulletin 87/16

(84) Etats contractants désignés :
DE GB IT

(56) Documents cités :
BE-A-    407 484
DE-A- 1 580 552
DE-B- 1 229 789
DE-C-    593 222
DE-C-    629 460
FR-A-    872 167
FR-A-    956 413
FR-A- 1 003 657
FR-A- 1 272 159
FR-A- 1 510 677
US-A- 2 592 656

(73) Titulaire : LUCAS FRANCE S.A.
11, rue Lord Byron
F-75008 Paris (FR)

(72) Inventeur : Chauveau, Jean-Marc
2/219 Clos St Vigor
F-78220 Viroflay (FR)
Inventeur : Fendeleur, Jean-Pierre
2 bis, Chemin de Versailles
F-92500 Rueil-Malmaison (FR)

(74) Mandataire : Martin, Jean-Jacques et al
Cabinet REGIMBEAU 26, Avenue Kléber
F-75116 Paris (FR)

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne les dispositifs de laminage, et plus particulièrement ceux qui peuvent être réglables, notamment en vue de leur application dans des systèmes comme les amortisseurs oléopneumatiques ou fluidiques.

Il existe déjà des dispositifs de laminage, mais ils sont d'une réalisation assez complexe pour donner de bons résultats, et surtout, ne permettent pas une intégration facile dans d'autres systèmes, et une bonne maintenance.

La présente invention a pour but de pallier ces inconvénients et de réaliser un dispositif de laminage fluidique d'une conception simple, compact et facile à usiner, tout en donnant néanmoins de bons résultats, c'est-à-dire d'une part, laminant parfaitement un fluide et, d'autre part, pouvant évacuer les calories dues à un éventuel échauffement du fluide.

Plus particulièrement, la présente invention a pour objet un dispositif de laminage comportant, de façon connue en soi :

un corps,

un logement en creux dans ledit corps,

une chemise délimitant dans ledit logement au moins une première et une deuxième chambres,

des moyens pour amener du fluide à laminer dans ladite première chambre,

un siège réalisé sur ladite chemise et comportant au moins un orifice pour mettre en communication lesdites première et deuxième chambres,

un clapet déplaçable à l'intérieur de ladite chemise pour coopérer avec ledit siège, ledit clapet étant déplaçable entre deux positions dites ouverte et fermée de l'orifice,

des moyens pour évacuer le fluide de ladite deuxième chambre.

FR-A-956 413 et FR-A-1 272 159 décrivent de tels dispositifs de laminage dans lesquels le clapet est sollicité par un ressort hélicoïdal dans le sens de la fermeture de l'orifice et qui sont appliqués à des amortisseurs notamment pour véhicules ; lorsque la pression du fluide à laminer dans la première chambre croît, le clapet se déplace dans le sens de l'ouverture, en comprimant progressivement le ressort, jusqu'à ce que s'établisse un équilibre entre les efforts appliqués sur le clapet d'une part par le fluide à laminer et d'autre part par le ressort, ce qui permet d'adapter l'effet d'amortissement au choc à amortir ; si la pression du fluide à laminer atteint ou dépasse un seuil déterminé, le clapet peut éventuellement venir s'immobiliser contre des moyens de butée si bien que, dès lors que ce seuil est atteint ou dépassé, on ne peut plus influencer l'effet d'amortissement, que ce soit de façon automatique ou de façon volontaire pour l'adapter au choc à amortir.

Pour offrir une possibilité de faire varier la force exercée sur le clapet dans le même temps qu'il commande le laminage, le dispositif de laminage selon l'invention se caractérise par le fait qu'il comprend :

une butée, ladite butée étant apte à coopérer avec ledit clapet,

un piston lié à ladite butée et coulissant dans un cylindre,

un fluide compressible dans ledit cylindre.

De ce fait, l'établissement d'une relation de coopération entre le clapet et la butée n'implique pas la fin de l'adaptation de l'effet d'amortissement au choc à amortir, mais l'entrée en service d'un ressort fluidique autorisant encore une telle adaptation, mais en modifiant la caractéristique d'amortissement.

Dans un mode de réalisation du dispositif de laminage, celui-ci comporte en outre des moyens pour alimenter de façon commandée le cylindre en fluide compressible.

On a déjà proposé, dans FR-A-1 510 677, d'influer sur la position d'un organe pouvant servir de moyen de butée pour un clapet, en réalisant cet organe sous la forme d'un piston coulissant sous l'action d'un fluide introduit de façon commandée dans une chambre partiellement délimitée par le piston ; toutefois, ce fluide est essentiellement incompressible car il est utilisé exclusivement à assurer une transmission de mouvement, à la façon d'une transmission Bowden, entre des moyens de réglage de la position du piston et ce dernier ; de ce fait, une compression du fluide n'intervient pas, dans ce dispositif connu, dans les efforts appliqués au clapet ; on observe en outre que, dans le dispositif connu, c'est dans le sens de l'ouverture que ce clapet est sollicité élastiquement si bien que ce dispositif connu relève d'un domaine technique différent de celui des dispositifs décrits par FR-A-956 413 et FR-A-1 272 159.

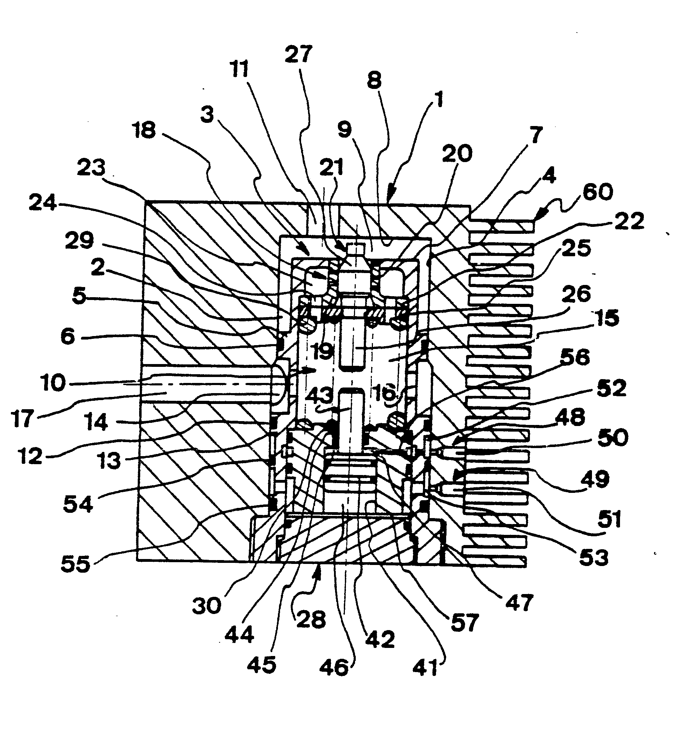

D'autres caractéristiques et avantages de la présente invention apparaîtront au cours de la description suivante, donnée en regard du dessin amené à titre illustratif mais nullement limitatif dans lequel la figure unique représente vu en coupe un mode de réalisation d'un dispositif de laminage selon l'invention.

Le dispositif de laminage illustré en coupe sur la figure comprend un corps 1 en un matériau ayant de préférence une bonne conductivité thermique afin d'évacuer les calories du fluide à laminer ou laminé.

Ce matériau peut être par exemple de la fonte ou de l'aluminium.

Dans ce corps 1, est usiné en creux un logement 2 de forme cylindrique. Dans ce logement est glissée une chemise 3 dont la surface extérieure comporte un certain nombre de joints qui coopèrent avec la paroi 4 du logement 3 pour délimiter un certain nombre de chambres qui seront définies ci-après.

La chemise supporte, sur une première partie en saillie 5, un premier joint 6. Aussi, ce joint 6, la partie 7 de la paroi de la chemise 3 et le fond 8 du logement délimitent une première chambre 9 d'une seconde 10. Cette chambre comporte des moyens d'amenée d'un fluide représentés par l'ouverture 11 percée dans le fond 8 du logement.

Un deuxième joint 12 sur une surépaisseur 13 délimite une chambre annulaire 14 faisant partie intégrante de la deuxième chambre 10 ; cependant, cette chambre communique avec l'intérieur 15 de la chemise 3 par un ou plusieurs orifices 16. Cette chambre annulaire 14 communique à l'extérieur du corps 1 par une traversée 17 constituant des moyens pour évacuer le fluide de la deuxième chambre 10.

La chemise 3 comporte à son extrémité 18 une paroi 19 qui, dans ce mode de réalisation, comporte une partie cylindrique, coaxiale au logement et portant un ou plusieurs orifices 20. Cette paroi 19 constitue un siège de forme « à cage » avec lequel peut coopérer un clapet coulissant 21, pour former avec ce siège un moyen de commande du passage du fluide de la première chambre 9 à la seconde 10.

Dans ce mode de réalisation, la paroi 19 comporte un épaulement 22 permettant de bien solidariser l'ensemble de la chemise 3, c'est-à-dire la paroi 7 et la paroi 19, formant siège. L'espace annulaire 23 est en communication avec l'intérieur de la chemise et la chambre annulaire 14 par des orifices de communication 24.

Dans ce mode de réalisation, le clapet 21 comporte une collerette 25 coulissant dans la chemise 3 et un picot 26 opposé à la tête 27 du clapet 21, la collerette comportant des orifices continuant les orifices 24.

La chemise 3 comporte une embase 28 permettant de fermer la deuxième chambre 10 et qui solidarise avec l'aide de moyens de fixation (non représentés) celle-ci au corps 1.

Entre cette embase 28 et la collerette 25 du clapet 21 est disposé un ensemble de ressorts 29, 30, exerçant de ce fait une force sur le clapet 21 tendant à le maintenir dans la position dite « fermeture » des orifices 20 et de ce fait de le ramener à cette position quand, comme il sera explicité ci-après, le clapet est déplacé vers une position dite « ouverture » des orifices 20.

L'ensemble des éléments décrits constitue un dispositif de laminage qui fonctionne de la façon suivante.

Le fluide à laminer est amené par le conduit 11 et pénètre dans la chambre 9. Il exerce sur la tête 27 du piston 21 une force qui tend à le pousser à l'encontre de l'ensemble des ressorts 29, 30.

Le fluide passe à travers les orifices calibrés 20, puis à travers l'espace annulaire 23, les orifices 24 sur le siège et la collerette, l'espace 15 intérieur de la chemise 3, les orifices 16, la chambre 14, et s'écoule alors vers l'extérieur par le conduit 17.

On conçoit que l'amortissement de l'écoulement du fluide est fonction, entre autre, de la force des ressorts de rappel 29, 30, et des orifices 20.

Il est donc possible de choisir au préalable ces éléments et même réaliser les orifices en nombre, diamètre et forme de passage pour obtenir une loi donnée.

Comme il a déjà été dit, les ressorts tendent à repousser le clapet dans la position dite fermeture pour obstruer les orifices et freiner de ce fait l'écoulement du fluide pour obtenir un amortissement qui peut même être complet quand le clapet reprend sa position de fermeture comme représenté sur la figure.

Cependant, dans certaines applications, il peut être nécessaire de limiter les orifices de passage pour augmenter par exemple le temps d'amortissement et/ou faire varier cette amortissement en cours de fonctionnement, en faisant varier la force de rappel du clapet dans la position de fermeture.

Pour cela, l'embase 28 comporte un alésage cylindrique 41 dans lequel peut se mouvoir un piston 42 comportant une tige émergeante 43 dans l'axe de déplacement du clapet 21 et plus particulièrement du picot 26. Cette tige émerge à travers un passage 44 qui peut être étanche au moyen du joint 45.

Le piston 42 partage le volume cylindrique 41 en deux espaces, à la manière d'un vérin 46, 47. Ces deux espaces 46, 47 sont alimentés à leurs extrémités opposées par, respectivement, deux conduits 48 et 49 pouvant amener et évacuer un fluide de commande qui sera défini ci-après. Les dimensions notamment du cylindre et la longueur de la tige 43 sont définies pour que, lorsque le piston 42 est le plus près du clapet 21, cette tige soit juste au contact du picot 26 et que, dans cette position, le clapet soit dans la position fermeture des orifices 20.

Les deux conduits 48 et 49 comportent respectivement des percées 50, 51 dans le corps 1, des chambres annulaires 52, 53, autour de la chemise 3, délimitées par des joints 54, 55, et des traversées 56, 57 de l'embase 28 qui débouche respectivement aux deux extrémités du volume cylindrique.

Ce dispositif de laminage comportant les moyens décrits ci-dessus fonctionne de la façon suivante.

Afin de faire varier la force exercée sur le clapet dans le même temps qu'il commande le laminage, la conduite 48 est laissée libre (elle pouralt même être reliée à l'intérieur 15 de la deuxième chambre 10 mentionnée précédemment) et la conduite 49 est connectée à une source de fluide compressible commandable notamment en pression, pour constituer dans l'espace 46 en-dessous du piston 42 un moyen élastique équivalent à un ressort à raideur variable et commandable.

Il est à noter que les ressorts 29, 30 peuvent être éventuellement supprimés ou alors exercer leur force en s'additionnant à celle du fluide compressible qui permet alors de soumettre le clapet à une force même quant celle donnée par le fluide compressible est nulle.

Si l'on veut par contre limiter la section de passage possible des orifices pour augmenter le temps d'amortissement, il est possible d'une façon non revendiquée de connecter les deux conduites 48, 49, à une source de fluide incompressible comme de l'huile et positionner le piston 42 pour que le déplacement du clapet soit limité par le picot 26 venu buter contre la tige 43 et que, alors dans cette position, le clapet 21 ne découvre que le nombre d'orifices 20 correspondant à la section de passage voulue pour le fluide à laminer.

Bien entendu, comme dit précédemment, le fluide laminé est souvent chaud, pour cela le corps 1 comporte des moyens pour évacuer les calories et faciliter le refroidissement du fluide. Il est réalisé de préférence en un matériau bon conducteur de la chaleur et même aussi comporte des ailettes de refroidissement 60.

## Revendications

1. Dispositif de laminage comportant :
un corps (1),
un logement en creux (2) dans ledit corps (1),
une chemise (3) délimitant dans ledit logement (2) au moins une première (9) et une deuxième (10) chambres,
des moyens (11) pour amener du fluide à laminer dans ladite première chambre (9),
un siège (18, 19) réalisé sur ladite chemise (3) et comportant au moins un orifice (20) pour mettre en communication lesdites première (9) et deuxième (10) chambres,
un clapet déplaçable (21) à l'intérieur de ladite chemise (3) pour coopérer avec ledit siège (18, 19), ledit clapet étant déplaçable entre deux positions dites ouverte et fermée de l'orifice (20),
des moyens pour évacuer (14, 15, 16, 17) ledit fluide de ladite deuxième chambre (10),
caractérisé par le fait qu'il comprend :
une butée (43), ladite butée étant apte à coopérer avec ledit clapet (26, 21),
un piston (42) lié à ladite butée (43) et coulissant dans un cylindre (41),
un fluide compressible dans ledit cylindre (41).

2. Dispositif de laminage selon la revendication 1, caractérisé par le fait qu'il comprend des moyens (48, 49) pour alimenter le cylindre (41) en fluide compressible, de façon commandée.

3. Dispositif de laminage selon l'une quelconque des revendications 1 et 2, caractérisé par le fait qu'il comprend en plus au moins un ressort (29, 30), prenant appui sur une de ses extrémités sur ledit clapet (25, 21), l'autre extrémité étant reliée à un point de référence (28) pour exercer une force sur ledit clapet.

4. Dispositif de laminage selon l'une quelconque des revendications précédentes, caractérisé par le fait que ledit orifice est constitué d'un ensemble d'orifices élémentaires dont le nombre, la section et la répartition sont déterminés en fonction d'une loi donnée.

## Claims

1. A throttling device comprising :
a body (1),
a cavity (2) formed by a hollow in the body (1),
a sleeve (3) defining in the cavity (2) at least a first chamber (9) and second chamber (10),
means (11) for introducing fluid to be throttled into said first chamber (9),
a seat (18, 19) formed on said sleeve (3) and including at least one orifice (20) for placing said first and second chambers (9, 10) in communication,
a movable valve (21) within said sleeve (3) to co-operate with said seat (18, 19), said valve being displaceable between two positions referred to as the open and closed positions of the orifice (20),
means (14, 15, 16, 17) for evacuating said fluid from said second chamber (10),
characterised by the fact that it comprises :
an abutment (43), said abutment being adapted to co-operate with said valve (26, 21),
a piston (42) connected to said abutment (43) and sliding in a cylinder (41),
a compressible fluid in said cylinder (41).

2. A throttling device according to Claim 1, characterised by the fact that it includes means (48, 49) for supplying the cylinder (41) with compressible fluid, in controlled manner.

3. A throttling device according to either of Claims 1 and 2, characerised by the fact that it comprises in addition at least one spring (29, 30), bearing at one of its ends on said valve (25, 21), the other end being connected to a reference point (28) in order to exert a force on said valve.

4. A throttling device according to any one of the preceding claims, characterised by the fact that said orifice is constituted by an assembly of elementary orifices of which the number, the section and the distribution are determined as a function of a given law.

## Patentansprüche

1. Drosselvorrichtung mit :
einem Körper (1),
einem Hohlraum (2) in dem genannten Körper
einer Ummantelung (3), die den genannten Hohlraum (2) wenigstens in eine erste (9) und eine zweite (10) Kammer unterteilt,
Mitteln zum Zuführen des zu drosselnden Strömungsmittels in die genannte erste Kammer (9),
einem Sitz (18, 19), der auf der genannten Ummantelung (3) ausgebildet ist und wenigstens eine Öffnung (20) umfaßt, um die genannte erste (9) und zweite (10) Kammer miteinander zu verbinden,
einem bewegbaren Ventil (21) im Inneren der genannten Ummantelung (3), um mit dem genannten Sitz (18, 19) zusammenzuarbeiten, wobei das genannte Ventil zwischen zwei Positionen, Öffnungsposition und Schließposition der öffnung (20) genannt, bewegbar ist,
Mitteln zum Evakuieren (14, 15, 16, 17) des genannten Strömungsmittels aus der genannten zweiten Kammer (10),
dadurch gekennzeichnet, daß sie umfaßt :
einen Anschlag (43), welcher genannte Anschlag mit dem genannten Ventil (26, 21) zusammenwirken kann,

einen Kolben (42), der mit dem genannten Anschlag (43) verbunden ist und sich in einem Zylinder (41) bewegt,

ein komprimierbares Strömungsmittel in dem genannten Zylinder (41).

2. Drosselvorrichtung nach Anspruch 1, dadurch gekennzeichnet, daß sie Mittel (48, 49) umfaßt, um den Zylinder (41) in gesteuerter Weise mit komprimierbarem Strömungsmittel zu versorgen.

3. Drosselvorrichtung nach einem der Ansprüche 1 oder 2, dadurch gekennzeichnet, daß sie ferner wenigstens eine Feder (29, 30) umfaßt, die mit ihrem einen Ende gegen das genannte Ventil (25, 21) anliegt und mit ihrem anderen Ende mit einem Referenzpunkt (28) verbunden ist, um eine Kraft auf das genannte Ventil auszuüben.

4. Drosselvorrichtung nach einem der vorhergehenden Ansprüche, dadurch gekennzeichnet, daß die genannte Öffnung durch eine Gruppe von Elementaröffnungen gebildet ist, deren Anzahl, Durchschnitt und Verteilung durch eine Funktion einer vorbestimmten Gesetzmäßigkeit bestimmt sind.